(19) **Europäisches Patentamt**
**European Patent Office**
**Office européen des brevets**

(11) **EP 0 425 934 B2**

(12) **NEUE EUROPÄISCHE PATENTSCHRIFT**

(45) Veröffentlichungstag und Bekanntmachung des Hinweises auf die Entscheidung über den Einspruch:
**08.01.1997 Patentblatt 1997/02**

(51) Int. Cl.⁶: **A01C 7/10**, A01C 7/00

(45) Hinweis auf die Patenterteilung:
**20.04.1994 Patentblatt 1994/16**

(21) Anmeldenummer: **90120082.4**

(22) Anmeldetag: **19.10.1990**

(54) **Drillvorrichtung für Saatgut**

Drill seeding device

Semoir en ligne pour semence

(84) Benannte Vertragsstaaten:
**DE ES FR GB**

(30) Priorität: **31.10.1989 US 429664**

(43) Veröffentlichungstag der Anmeldung:
**08.05.1991 Patentblatt 1991/19**

(73) Patentinhaber: **DEERE & COMPANY**
**Moline, Illinois 61265 (US)**

(72) Erfinder:
• **Hook, Richard Wayne**
**Des Moines, Iowa 50265 (US)**
• **Coordes, Duane A.**
**Rock Island, Illinois 61201 (US)**

(74) Vertreter: **Feldmann, Bernhard et al**
**DEERE & COMPANY**
**European Office**
**Patent Department**
**68140 Mannheim (DE)**

(56) Entgegenhaltungen:
EP-A- 0 142 480          EP-A- 0 251 052
EP-A- 0 254 218          DE-A- 1 557 906
DE-A- 2 438 575          DE-A- 2 819 365
DE-A- 3 310 424          DE-A- 3 319 833
DE-A- 3 615 818          DE-C-  367 730
DE-C- 2 505 369          FR-A- 2 326 137
FR-A- 2 423 963          FR-A- 2 568 031
GB-A- 2 133 556          US-A- 3 620 419
US-A- 4 408 704          US-A- 4 697 173

• **Accord Bedienungsanleitung Drillmaschine DL, DT, DA, DF.**
• **Handbook "Landbouwwerktuigen"**

**Beschreibung**

Die Erfindung betrifft eine Drillvorrichtung für Saatgut, die beispielsweise Bestandteil einer Drillmaschine ist, mit mehreren nebeneinander angeordneten Saatgutdosierern, die jeweils ein in einem zugehörigen Dosiergehäuse angeordnetes drehbares Dosierglied aufweisen, ferner mit Antriebsmitteln zur Drehung der Dosierglieder in Abhängigkeit der Fahrgeschwindigkeit der Drillmaschine, so daß die Saatgutabgabe von der Fahrgeschwindigkeit abhängt, und mit Einstellmitteln zur Verstellung der Lage der Dosierglieder quer zur Fahrtrichtung, wodurch sich die Saatgutabgabe einstellen läßt.

Eine derartige Drillvorrichtung ist in der US-A-3,620,419 beschrieben.

Drillmaschinen für Saatgut enthalten in der Regel mehrere quer zur Fahrtrichtung angeordnete, zueinander beabstandete Saatgutdosiereinrichtungen mit geriffelten Speiserädern, die durch ein den Boden berührendes Rad des Saatgerätes angetrieben werden, so daß pro Zeiteinheit eine Saatgutmenge ausgetragen wird, die proportional zur Antriebsgeschwindigkeit des Saatgerätes ist. Dadurch ergibt sich unabhängig von der Fahrgeschwindigkeit stets eine gleich große Saatgutabgabe pro überfahrener Flächeneinheit. Um den Wert der Saatgutabgabe zu verändern, wird gewöhnlich entweder das Übersetzungsverhältnis zwischen dem Rad des Saatgerätes und der die Speiseräder antreibenden Aritriebswelle verändert, oder es werden die Speiseräder innerhalb des sie umgebenden Dosiergehäuses verschoben. Letzteres erfolgt manuell durch seitliches Verschieben der Antriebswelle, wodurch der effektive Dosierbereich der Speiseräder verändert wird. Grobe Verstellungen, um beispielsweise die Dosierung auf unterschiedliche Samenarten einzustellen, werden gewöhnlich durch Veränderung der Speisetore der Dosiereinrichtungen und/oder durch Änderung des Übersetzungsverhältnisses vorgenommen.

Bei bekannten Drillvorrichtungen ist es für die Bedienungsperson schwierig, die genaue Saatgutabgabe festzustellen und eine Feinabstimmung der Einstellung vorzunehmen, wenn ein neues Feld zu bearbeiten ist oder wenn die Samensorte gewechselt werden soll. Ferner ist es im Grunde genommen unmöglich, während der Fahrt die Saatgutabgabe zu verändern, um sie auf veränderte Bedingungen anzupassen. Bekannte Überwachungssysteme für die Überprüfung der Saatgutabgabe sind teuer, insbesondere wenn jede Saatreihe mit einem gesonderten Monitor bestückt werden muß, wie es auf ähnliche Weise bei Reihenpflanzmaschinen der Fall ist. Ferner ist es eine bisher ungelöste Aufgabe, eine wirksame und erschwingliche Steuerung oder einen geschlossenen Regelkreis für Drillmaschinen bereitzustellen.

Die EP-A-0 254 218 beschreibt eine landwirtschaftliche Verteilermaschine mit einem Vorratsbehälter, von dem aus das auszubringende Saatgut mehreren auf einer Dosierwelle drehfest angeordneten Dosierorganen, welche als Nockenräder ausgebildet sind, zugeführt wird. Die Dosierwelle wird über ein stufenlos einstellbares Regelgetriebe und einen Kettentrieb von einer Kraftquelle angetrieben. Durch Beeinflussung der Drehzahl der Dosierwelle läßt sich die Menge des ausgebrachten Saatguts einstellen. Der Meßwert der durch den Sensor erfaßten Saatgutmenge sowie das Signal einer Wegstreckenmeßeinrichtung werden einem Mikroprozessor zugeleitet, der hieraus einen Istwert berechnet und diesen mit einem eingebbaren Sollwert vergleicht. Weicht der Istwert von dem Sollwert ab, so gibt der Mikroprozessor Steuersignale an einen Stellmotor ab, der entsprechend den Stellhebel eines Regelgetriebes verstellt und die Drehzahl der Dosierwelle und damit die Menge des ausgebrachten Saatguts nachstellt. Bei dieser Verteilermaschine werden die Dosierorgane durch eine nicht näher bezeichnete Kraftquelle angetrieben. Es ist ein relativ aufwendiges Regelgestänge und -getriebe erforderlich, das einen sehr großen Regelbereich abdecken muß. Eine Feindosierung der ausgebrachten Saatgutmenge ist kaum möglich.

Die mit der Erfindung zu lösende Aufgabe wird darin gesehen, ein verbessertes Dosiersystem für eine Drillvorrichtung der eingangs genannten Art bereitzustellen, mit der die genannten Probleme überwunden werden können. Es soll eine bequeme, den wechselnden Anforderungen des Betriebs angepaßte Einstellung der Einstellmittel möglich sein.

Die Aufgabe wird erfindungsgemäß durch die Merkmale des Patentanspruchs 1 gelöst.

Durch diese Steuerung, die vorzugsweise weitgehend automatisch und elektrisch oder elektronisch erfolgt, wird die Dosiermöglichkeit erheblich verbessert. Die Einstellung der Saatgutabgabe läßt sich ohne weiteres von einem beliebigen Ort aus, beispielsweise aus der Fahrzeugkabine einer Zugmaschine, auch während der Fahrt verändern und durch eine Bedienungsperson einstellen und auf unterschiedliche Bedingungen anpassen. Die Steuerung erlaubt eine Feindosierung auch dann, wenn die übrigen Einstellmöglichkeiten relativ grob sind, wie beispielsweise die Einstellung der Antriebsmittel zur Drehung der Dosierglieder durch Austausch von Zahnrädern und/oder Veränderung der Speisetoreinstellung.

Es ist auch möglich, einen relativ einfachen und wirkungsvollen geschlossenen Regelkreis für die erfindungsgemäße Drillvorrichtung aufzubauen. Ferner lassen sich genaue Anzeigen der Saatgutabgabe ableiten.

Die erfindungsgemäße Drillvorrichtung ist relativ einfach im Aufbau und preiswert herstellbar. Sie läßt sich ohne weiteres für eine Anwendung auf größere und/oder in mehrere Sektoren eingeteilte Sämaschinen erweitern. Auch läßt sich bei der Drillvorrichtung dieselbe Elektronik sowohl für einzelne Drillmaschinen als auch für Multiplex-Drillmaschinenanordnungen verwenden.

Vorzugsweise enthält der Saatgutdosierer eine seitlich innerhalb eines Gehäuses verschiebbare, geriffelte Speisetrommel, die durch eine Antriebswelle verdrehbar und seitlich verschiebbar ist. Die seitliche Verschiebung wird durch die erfindungsgemäße automatische Steuerung vorgenommen. Erfindungsgemäß werden mehrere Saatgutdosierer mit einem Saatgutsensor zur Erfassung der Saatgutabgabe versehen, deren Meßsignale zur Erzeugung eines der Saatgutabgabe entsprechenden Signals herangezogen werden. Um unnötige Kosten zu vermeiden, Leitungen einzusparen und Wartungsarbeiten zu verringern, ist es zweckmäßig, nicht jeden Saatgutdosierer mit einem Saatgutsensor zu bestücken. Die erforderliche Anzahl kann auf die Anforderungen aus dem Betrieb gewählt werden.

Für den Aufbau eines geschlossenen Regelkreises werden, die Einstellmittel in Abhängigkeit der Saatgutabgabe gesteuert. Hierfür sind Steuermittel vorgesehen, durch die die Saatgutabgabesignale des Saatgutsensors zunächst gemittelt werden. Der Mittelwert wird dann mit einem durch eine Eingabevorrichtung vorgebbaren Sollwert für die Saatgutabgabe verglichen. Aus der Differenz zwischen Soll- und Istwert wird ein Fehlersignal gebildet, das zur automatischen Nachführung der Einstellmittel und damit für die Gewährung einer gleichbleibenden Saatgutabgabe herangezogen wird. Hierfür kann ein Antrieb vorgesehen sein, durch den sich die geriffelten Speiseräder innerhalb ihrer Dosiergehäuse in Richtung der Drehachse verschieben lassen, wodurch die Saatgutabgabe verändert wird.

Ist das Fehlersignal besonders groß und überschreitet einen vorgebbaren Grenzwert, was auf eine Störung zurückzuführen sein kann, so wird vorzugsweise durch eine Alarmvorrichtung automatisch ein für die Bedienungsperson wahrnehmbares Signal abgegeben, wodurch diese auf die Störung aufmerksam wird.

Ferner können zweckmäßigerweise auch Mittel zur Erfassung der Lage der Einstellmittel vorgesehen sein, deren Signal herangezogen wird, um bei Erreichen einer vorgebbaren Grenzlage der Einstellmittel für die Bedienungsperson wahrnehmbare Signale abzugeben.

Besonders vorteilhaft läßt sich die Erfindung anwenden, wenn wenigstens zwei Sätze von Saatgutdosierern vorgesehen sind, die jeweils gesonderte Antriebsmittel zur Drehung und Einstellmittel zur Verstellung der Saatgutabgabe enthalten. Hier kann jedem Satz wenigstens ein Saatgutsensor zugeordnet sein. Für jeden Satz wird ein gesondertes Signal für die Saatgutabgabe gebildet, das zur automatischen Betätigung der zugehörigen Einstellmittel herangezogen wird. Ein Schalter oder Multiplexkreis ermöglicht es, daß eine einzige Steuereinrichtung ausreicht, um die Einstellmittel sequentiell zu steuern. Es ist somit trotz getrennt arbeitender Saatgutdosierer möglich, für jeweils getrennte geschlossene Regelkreise lediglich eine in Multiplexarbeitsweise betriebene Steuereinrichtung zu verwenden. Hierdurch können Kosten eingespart und die Komplexität des Systems vermindert werden, ohne daß die auch während der Fahrt durchführbare Saatgutsteuerung beeinträchtigt würde.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1 die perspektivische Rückansicht einer Getreidedrillmaschine mit mehreren auf einer gemeinsamen Antriebswelle angeordneten Saatgutdosiereinrichtungen,

Fig. 2 die schematische Darstellung einer Steuerung für die Saatgutausgabe einer Getreidedrillmaschine gemäß Fig. 1 und

Fig. 3 die schematische Darstellung einer umschaltbaren oder mit Multiplexer versehenen Steuerung für die Saatgutausgabe zur Einstellung der Dosiereinrichtungen mehrerer verschiedener Drillmaschinen oder Antriebswellen.

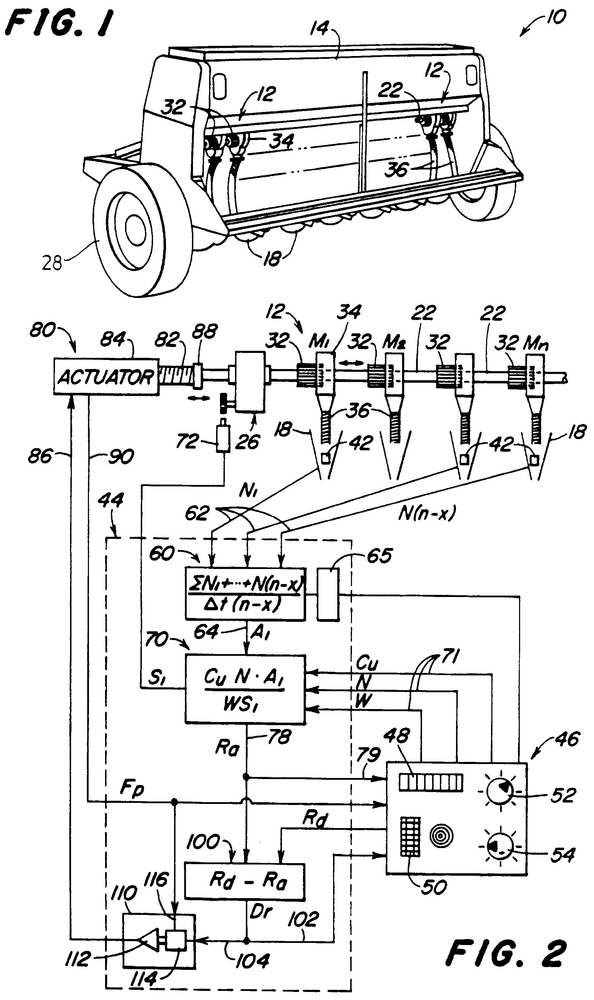

Aus den Figuren 1 und 2 geht eine Getreidedrillmaschine 10 hervor, die wenigstens einen Satz von Dosiereinrichtungen 12 enthält, der zwischen einem Saatgutbehälter 14 und Fürchenziehwerkzeugen 18 angeordnet ist. Die Dosiereinrichtungen 12 stehen mit einer Antriebswelle 22 in Verbindung und werden durch eine konventionelle Antriebsanordnung 26 von einem den Boden berührenden Rad 28 angetrieben, um eine Saatmenge auszutragen, die proportional zur Fahrgeschwindigkeit der Drillmaschine 10 ist.

Bei den Dosiereinrichtungen 12 handelt es sich vorzugsweise um solche, wie sie in der US-PS 4,408,704 beschrieben sind. S.ie enthalten seitlich verschiebbare, geriffelte Speiseräder 32, die gleitend von Dosiergehäusen 34 aufgenommen werden. Durch seitliches Verschieben des geriffelten Speiserades 32 innerhalb des Dosiergehäuses 34 wird der effektive Dosierbereich des Speiserades 32 verändert, so daß sich die Saatgutabgabe jeder Dosiereinrichtung 12 variieren läßt. Die Speiseräder 32 der Dosiereinrichtungen 12 sind auf der Antriebswelle 22 befestigt, welche seitlich bewegbar ist, so daß sich alle Dosiereinrichtungen auf der Welle 22 gemeinsam verstellen lassen. Wünscht die Bedienungsperson beispielsweise eine leichte Steigerung (oder Abnahme) der Saatgutabgabe durch die Dosiereinrichtungen 12, so kann sie, wie in Fig. 1 gezeigt, die Welle 22 nach rechts (oder links) bewegen, um den effektiven Dosierbereich der geriffelten Speiseräder 32 zu vergrößern (oder verkleinern). Größere Verstellungen, die bei einem Wechsel der Saatgutsorte (z. B. von Sojabohnen auf Getreide) erforderlich sind, lassen sich durch Veränderung des Übersetzungsverhältnisses des Getriebes und/oder durch Verstellen von Speisetoren jeder Dosiereinrichtung 12 erreichen.

Jede der Dosiereinrichtungen 12 ist mit einem Saatrohr 36 verbunden, welches seinerseits mit einem der Furchenziehwerkzeuge 18 verbunden ist. Wie in Fig. 2 gezeigt, sind n Dosiereinrichtungen, $M_1 - M_n$, mit der Antriebswelle 22 verbunden. An n-x (n-x ist mindestens 1, jedoch vorzugsweise kleiner als n) der Saatrohre 36 sind Saatgutenfassungsvorrichtungen 42 angeschlossen. Bei den Saatguterfassungsvorrichtungen 42 kann es sich um solche handeln, wie sie durch die Fa. Pioneer Technology of Sunnyvale, California, USA angeboten werden. die (n-x) Ausgänge sind an Eingangsklemmen eines Steuerkreises 44 angeschlossen, welcher seinerseits mit einer Ein-Ausgabe/Alarmsignalvorrichtung (E/A) 46 in Verbindung steht. Die E/A-Vorrichtung 46 enthält eine Ableseeinrichtung 48, welche wahlweise die durchschnittliche Saatgutabgabe der überwachten Dosiereinrichtungen 12 oder verschiedene andere Informationen ausgibt. Solche Informationen sind beispielsweise Eingangsparameter (Sollwert der Saatgutausgabe $R_d$, Reihenabstand W, Zahl N der Reihen und gewünschte Einheiten von Meßgrößen, wie z. B. der Istwerte der Samenzahl oder des Saatvolumens oder -gewichts $C_u$), die in den Steuerkreis 44 eingegangen sind, um daraus Angaben für die Saatgutabgabe zu berechnen. Eine Tastatur 50 oder eine andere konventionelle Eingabevorrichtung wird für die Eingabe von Variablen, die durch den Mehrpositionenbedienungsschalter 52 auswählbar sind, verwendet. Durch einen zweiten Bedienungsschalter 54 lassen sich Ausgabegrößen auswählen, die auf der Ausleseeinrichtung 48 angezeigt werden sollen. Solche Ausgabegrößen sind beispielsweise die jeweils errechnete Saatgutabgabe, die Differenz zwischen aktueller und erwünschter Saatgutausgabe sowie eine Positionsangabe der Antriebswelle 22.

Der Steuerkreis 44 umfaßt einen Kreis 60, der mehrere mit den einzelnen Saatgutenfassungseinrichtungen 42 verbundene Eingänge 62 aufweist und der der Mittelung der Eingangswerte dient. Wie aus Fig. 2 hervorgeht, summiert der Kreis 60 die Meßsignale der Samenzahl oder der Saatgutmassen $N_y$ von den (n-x) Sensoren 42 über eine Zeitdauer dt auf und liefert ein Durchschnittssignal $A_1$ für die Saatgutabgabe an einen Ausgangskontakt 64. Die Berechnung erfolgt gemäß der Beziehung:

$$A_1 = (N_1 + \cdots + N_{(n-x)})/dt(n-x)$$

Der Kreis 60 kann einen Vergleichskreis 65 zum Vergleich des Durchschnittssignals $A_1$ mit den individuellen Signalen jedes der Sensoren 42 enthalten. Der Vergleichskreis 65 liefert die Differenzsignale:

$$D_y = (A_1 - N_y)$$

Ist eines oder mehrere der Differenzsignale $D_y$ größer als ein vorgebbarer Differenzwert $d_p$ (z. B. $D_y > d_p$), so wird ein Warnsignal von der E/A-Vorrichtung ausgelöst, welches die Bedienungsperson auf eine mögliche ungleichmäßige Saatbedingung hinweist, die beispielsweise durch ein verstopftes Saatrohr 36 oder eine unsachgemäße Einstellung von Speisetoren verursacht sein kann.

Der Ausgangskontakt 64 des Mittelwertbildungskreises 60 ist mit einem Eingangskontakt eines Kreises 70 zur Bestimmung der Saatgutabgabe verbunden. Der Ausgangswert eines Wellendrehzahlsensors 72 ist ebenfalls mit dem Kreis 70 verbunden. Er liefert ein Drehzahlsignal $S_1$, welches kennzeichnend für die Vortriebsgeschwindigkeit der Drillmaschine 10 ist. Variable Eingangsgrößen für den Reihenabstand W, die Anzahl N der Reihen und erforderliche Umrechnungsgrößen $C_u$, die über die Tastatur 50 eingegeben werden können, werden dem Kreis 70 über die Leitung 71 mitgeteilt. Der Kreis 70 berechnet die tatsächliche Saatgutabgabe $R_a$ für die Dosiereinrichtungen $M_1 - M_n$ anhand folgender Beziehung:

$$R_a = (C_u N \cdot A_1)/(WS_1)$$

Ein Ausgangskontakt 78 ist mit einem Eingang 79 der E/A-Vorrichtung 46 verbunden, um eine Anzeige auf dem Display 48 über die tatsächliche Saatgutabgabe $R_a$ zu ermöglichen. Der Wert der Saatgutabgabe kann in Samen, Volumen oder Gewicht pro Acre oder Hektar ausgegeben werden, je nachdem welche Einheit von der Bedienungsperson ausgewählt wurde und welche Einheit den örtlichen Gewohnheiten entspricht.

Um die Saatgutabgabe von einem Ort aus, der von den Dosiereinrichtungen 12 entfernt ist, nach Maßgabe einer Anzeige durch das Display 48 zu ändern, ist ein Antrieb 80 funktionsmäßig mit der Antriebswelle 22 für die Dosiereinrichtungen 12 derart verbunden, daß die Antriebswelle 22 seitlich verschiebbar ist, wodurch sich die effektiven Dosierbereiche der geriffelten Speiseräder 32, die mit der Welle 22 verbunden sind, verändern lassen. Vorzugsweise ist der Antrieb 80 ein elektrischer Linearantrieb mit einem drehbaren Gewindeteil 82, welches sich durch einen umsteuerbaren Motor 84 wahlweise nach innen oder außen bewegen läßt. Hierzu wird eine positive oder negative Eingangsspannung, die von dem Kreis 44 gebildet wird, über eine Leitung 86 an einen Eingangskontakt des Antriebes angelegt. Das Gewindeteil 82 kann entweder stufenlos oder in bestimmten Stufen mit festgelegtem Betrag angetrieben werden. Die Stufen sind beispielsweise 1/16 Zoll (1 Zoll = 25,4 mm), sofern ein Impuls von bestimmter Größe und Zeitdauer von dem Antrieb 80 empfangen wird. Alternativ hierzu kann auch ein hydraulischer Kreis verwendet werden, der einen hydraulischen Antrieb zur Verstellung der Antriebswelle 22 enthält. Das Ende des Gewindeteiles 82 ist mit der Antriebswelle 22 über eine Lagerschale 88 verbunden, die eine relative Verdrehung zwischen der Antriebswelle 22 und dem Gewindeteil 82 erlaubt, jedoch die Antriebswelle 22 für axiale Bewegungen fest mit dem Gewindeteil 82 verbindet.

Ein Rückführsignal $F_p$ wird durch ein Potentiometer oder eine andere die Lage der Welle 22 erfassende Einrichtung, die in dem Antrieb enthalten sein kann, an eine Rückführleitung 90 geliefert. Die Leitung 90 ist mit der E/A-Vorrichtung 46 verbunden. Eine Bedienungsperson kann durch entsprechende Einstellung des Bedienungsschalters 54 das Ausgangssignal für die Antriebsposition auf dem Display 48 zur Anzeige bringen und ablesen, ob die geriffelten Speiseräder 32 innerhalb eines Bereiches arbeiten, der noch eine seitliche Verschiebung erlaubt. Ein Detektorkreis ist in der E/A-Vorrichtung 46 vorgesehen, der dann ein Warnsignal liefert, wenn das Signal $F_p$ einen ersten oder zweiten Wert erreicht, der einer Endlage oder einer maximalen Einstellage der Antriebswelle 22 entspricht. Das Warnsignal macht die Bedienungsperson darauf aufmerksam, daß eine weitere Verstellung der Antriebswelle 22 in die gegebene Richtung nicht mehr möglich ist.

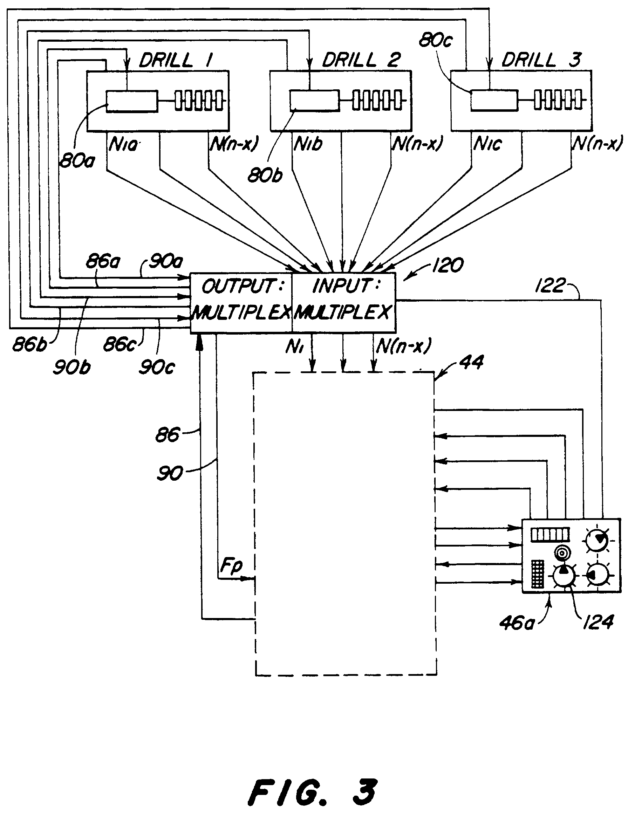

Wie die Figuren 2 und 3 zeigen, ist der Antrieb 80 Teil eines geschlossenen Regelkreises, der den Steuerkreis 44 umfaßt. Dieser liefert automatisch über die Leitung 86 ein Korrektursignal, um die Antriebswelle 22 seitlich zu verschieben und eine Differenz zwischen dem Istwert der Saatgutabgabe $R_a$ und deren Sollwert $R_d$ abzubauen. Alternativ hierzu kann ein nicht dargestelltes Bedienungsorgan auf der Frontplatte der E/A-Vorrichtung oder einem anderen bequem zu erreichenden Ort in der Schlepperkabine vorgesehen sein, durch das die Bedienungsperson von Hand einen Sollwert für die Wellenverschiebung in Abhängigkeit von der Anzeige der Ableseeinrichtung 48 von der Traktorkabine aus auswählen kann.

Wie aus Fig. 2 hervorgeht, ist ein Differenzermittlungskreis 100 mit dem Kreis 70, der der Bestimmung der Saatgutabgabe dient, verbunden und liefert ein Differenzsignal $D_r$:

$$D_r = R_d - R_a,$$

welches über die Leitung 102 der E/A-Vorrichtung zugeführt wird. Die Bedienungsperson kann durch Einstellen des Bedienungsschalters 54 das Differenzsignal $D_r$ zur Anzeige auf dem Display 48 bringen und dann zur Feinabstimmung der Saatgutausgabe den Antrieb 80 um einen oder mehrere Schritte in die erforderliche Richtung verstellen, so daß das Fehlersignal vermindert wird. Bei einem stufenlos einstellbaren Antrieb wird der Motor für eine kurze Zeit in die gewünschte Richtung angetrieben.

Wie die Fig. 2 zeigt, wird das Fehlersignal $D_r$ über die Leitung 104 dem Eingang des Ansteuerkreises 110 für den Antrieb 80 zugeführt. Der Ansteuerkreis 110 enthält einen Ausgangsverstärker 112, dessen Ausgang die Referenzspannung einnimmt, wenn das Fehlersignal innerhalb bestimmter Grenzen liegt. Liegt das Fehlersignal jedoch außerhalb dieser Grenzen, so liefert der Ausgangsverstärker 112 ein Ausgangssignal, dessen Polarität hinsichtlich der Referenzspannung durch das Fehlersignal $D_r$ bestimmt ist. Ist das Fehlersignal negativ, da der Saatgutabgabeistwert größer als eine bestimmte Sollabgabe ist, so wird ein negatives Signal an den Antrieb 80 angelegt, um das Gewindeteil 82 einzuziehen und damit die Welle 22 gemäß Fig. 2 nach links zu bewegen. Hierdurch wird der effektive Dosierbereich der geriffelten Speiseräder 32 und damit auch die Saatgutabgabe vermindert. Ist hingegen der Saatgutabgabesollwert kleiner als der Istwert, so wird an den Antrieb 80 ein positives Signal angelegt, wodurch das Gewindeteil 82 ausgefahren wird und der effektive Dosierbereich der geriffelten Speiseräder 32 vergrößert wird. Die Zahl der Impulse (oder die Länge des Signals), die von dem Ausgangsverstärker 112 an die leitung 86 abgegeben werden, wird durch die Impulsformerschaltung 114 bestimmt, welche den Verstärkerausgang so steuert, daß das Antriebssignal in Abhängigkeit von der Größe und Polarität des Fehlersignals am Eingang des Antriebssteuerkreises 110 gebildet wird. Alternativ hierzu kann das Rückführsignal $F_p$, das der tatsächlichen Lage des Antriebs 80 entspricht, an einen Steuereingang 116 der Impulsformerschaltung 114 angelegt werden, so daß der Verstärker 112 mit einem Eingangssignal der erforderlichen Polarität so lange angesteuert wird, bis das Rückführsignal $F_p$ einen vorbestimmten Betrag ändert, wobei dieser Betrag von der Größe des Fehlersignals $D_r$ abhängt. Das Fehlersignal $D_r$ kann beispielsweise durch eine Zeitgeberschaltung, wie z. B. ein RC-Netzwerk, welches ein Zeitintervall vorgibt, das von der Größe des Fehlersignals abhängt, angesteuert werden. Ein ungewöhnlich großes Fehlersignal am Ausgang des Kreises 100 wird durch die E/A-Vorrichtung 46 nachgewiesen, welche ein akustisches und/oder sichtbares Signal abgibt, um die Bedienungsperson auf eine mögliche Störung im Dosiersystem hinzuweisen.

Herkömmliche Analog- oder Digitaltechniken können im Steuerkreis 44 angewendet werden. Wenn gewünscht, können sich die Funktionen des Steuerkreises 44 und der E/A-Vorrichtung auf Mikroprozessoren stützen.

Die Fig. 3 zeigt ein alternatives Ausführungsbeispiel der Erfindung. Hier werden die Saatgutabgaben mehrerer Teilbereiche oder individueller Drillmaschinen 10a - 10b mit einem einzigen Steuerkreis 44 und einer E/A-Vorrichtung 46a überwacht und gesteuert. Die Saatgutdetektoren 42 jeder Drillmaschine bzw. jedes Drillbereiches sind wahlweise der Reihe nach über einen Umschalt- oder

Multiplexkreis 120 mit dem Eingang des Mittelwertbildungskreises 60 verbunden. Eine Steuerleitung verbindet die E/A-Vorrichtung 46a mit dem Multiplexkreis 120, und ein Auswahlschalter 124 gestattet es der Bedienungsperson, den Multiplexkreis 120 anzusteuern, um festzulegen, welche Drillmaschine oder welcher Drillbereich überwacht wird. Ferner verbindet der Kreis 120 den Ausgang 86 des Kreises 110 und die Rückführleitung 90 mit dem Antrieb 80 der überwachten Drillmaschine. Die Betätigung des Kreises 44 durch das Steuergerät 46a zur Steuerung der Saatgutabgabe einer ausgewählten Drillmaschine ist im wesentlichen mit der oben anhand der Fig. 2 beschriebenen identisch. Wenn gewünscht, kann die E/A-Vorrichtung einen Schaltkreis enthalten, durch den eine ständige Umschaltung des Multiplexkreises 120 auf die Drillmaschinen erfolgt, so daß die Saatgutabgaben automatisch überwacht und fortwährend nachgestellt werden, um die Saatgutabgaben der Drillmaschinen 10a - 10c innerhalb gewünschter Grenzen zu halten. Der Kreis gemäß Fig. 3 kann auch in einem rückführungsfreien Regelkreis verwendet werden, indem eine durch die Bedienungsperson von einem entfernt liegenden Ort aus einstellbare Steuereinrichtung für den gewünschten Antrieb 10a - 10c bereitgestellt wird, während die entsprechende zu überwachende Drillmaschine von dem Multiplexkreis ausgewählt wird.

Auch wenn die Erfindung lediglich anhand zweier Ausführungsbeispiele beschrieben wurde, erschließen sich für den Fachmann im Lichte der vorstehenden Beschreibung viele verschiedenartige Alternativen, Modifikationen und Varianten, die unter die vorliegende Erfindung fallen, wie sie in den Ansprüchen definiert ist.

**Patentansprüche**

1. Drillvorrichtung für Saatgut mit mehreren nebeneinander angeordneten Saatgutdosierern (M), die jeweils ein in einem zugehörigen Dosiergehäuse (34) angeordnetes drehbares Dosierglied (32) aufweisen, mit Antriebsmitteln (22, 26) zur Drehung der Dosierglieder (32) in Abhängigkeit der Fahrgeschwindigkeit des mit der Drillvorrichtung versehenen Saatgerätes (10), so daß die Saatgutabgabe von der Fahrgeschwindigkeit abhängt, und mit Einstellmitteln (80) zur Verstellung der Lage der Dosierglieder (32) quer zur Fahrtrichtung, wodurch sich die Saatgutabgabe einstellen läßt, dadurch gekennzeichnet,

   daß mehreren der Saatgutdosierer (M$_y$) jeweils ein Saatgutsensor (42) zur Erfindung der Saatgutabgabe zugeordnet ist, deren Meßsignale (N$_y$) zur Erzeugung eines der Saatgutabgabe entsprechenden Signals (R$_a$) herangezogen werden,
   daß ein Mittelwertbildner (60) vorgesehen ist, der aus den Meßsignalen (N$_y$) der Saatgutsensoren (42) ein Durchschnittssignal (A$_1$) der Saatgutabgabe bildet,
   daß die Einstellmittel (80) in Abhängigkeit der Saatgutabgabe gesteuert werden, und
   daß eine von einem entfernt liegenden Ort aus betätigbare Steuerung (44, 46) vorgesehen ist, durch die sich die Einstellmittel (80) zur Verstellung der Lage der Dosierglieder (32) auch während der Fahrt des Saatgerätes (10) verstellen lassen.

2. Drillvorrichtung nach Anspruch 1, dadurch gekennzeichnet, daß ein Saatgutdosierer (M) eine seitlich innerhalb eines Gehäuses (34) verschiebbare, geriffelte Speisetrommel (32) enthält, die durch eine Antriebswelle (22) verdrehbar und seitlich verschiebbar ist.

3. Drillvorrichtung nach Anspruch 1 oder 2, dadurch gekennzeichnet, daß Steuermittel (100) enthalten sind, durch die das Saatgutabgabesignal (R$_a$) des wenigstens einen Saatgutsensors (42) mit wenigstens einem durch eine Eingabevorrichtung (46) vorgebbaren Sollwert (R$_d$) für die Saatgutabgabe verglichen und ein Fehlersignal (D$_r$) gebildet wird, das zur automatischen Nachführung der Einstellmittel (80) dient.

4. Drillvorrichtung nach einem der Ansprüche 1 bis 3, dadurch gekennzeichnet, daß durch die Einstellmittel (80) wenigstens n Saatgutdosierer (M) seitlich verschiebbar sind, wobei n eine ganze Zahl größer als 1 ist, und daß n-x der n Saatgutdosierer (M) je ein Saatgutsensor (42) zugeordnet ist, wobei n-x eine ganze Zahl größer als oder gleich 1, jedoch kleiner als n ist.

5. Drillvorrichtung nach einem der Ansprüche 3 bis 4, dadurch gekennzeichnet, daß eine Alarmvorrichtung (46) vorgesehen ist, die dann, wenn das Fehlersignal (D$_r$) einen vorgebbaren Grenzwert überschreitet, für die Bedienungsperson wahrnehmbare Signale abgibt.

6. Drillvorrichtung nach einem der Ansprüche 1 bis 5, dadurch gekennzeichnet, daß Mittel zur Erfassung der Lage der Einstellmittel (80) vorgesehen sind und daß bei Erreichen einer vorgebbaren Grenzlage der Einstellmittel (80) für die Bedienungsperson wahrnehmbare Signale abgegeben werden.

7. Drillvorrichtung nach einem der Ansprüche 1 bis 6, dadurch gekennzeichnet, daß wenigstens zwei Sätze von Saatgutdosierern (M) vorgesehen sind, die jeweils gesonderte Antriebsmittel (22, 26) zur Drehung und Einstellmittel (80a, 80b, 80c) zur Verstellung der Saatgutabgabe enthalten, daß jedem Satz wenigstens ein Saatgutsensor (42) zugeordnet ist und daß für jeden Satz ein gesondertes Signal für die Saatgutabgabe gebildet wird, das zur automatischen Betätigung der zugehörigen Einstellmittel (80a, 80b, 80c) herangezogen wird.

8. Drillvorrichtung nach Anspruch 7, dadurch gekennzeichnet, daß elektronische Steuermittel (120) vorgesehen sind, durch die die Meßsignale (N$_y$) der Sätze nacheinander ausgewertet und zur Steuerung der zugehörigen Einstellmittel (80a, 80b, 80c) herangezogen werden.

**Claims**

1. A seed drill device with a plurality of adjacently arranged seed meters (M), each comprising a rotary metering member (32) in an associated meter housing (34), with drive means (22, 26) for rotating the metering members (32) in dependence on the speed of travel of the seeder (10) fitted with the drill device, so that the seed delivery is dependent on the speed of travel, and with adjusting means (80) for adjusting the position of the metering members (32), transverse to the direction of travel, whereby the seed delivery can be adjusted, characterized in that a plurality of the seed meters ($M_y$) each have an associated seed sensor (42) for detecting the seed delivery, their measuring signals ($N_y$) being used to derive a signal ($R_a$) corresponding to the seed delivery, in that an average forming device (60) is provided, which forms an average signal ($A_1$) for the seed delivery from the measuring signals ($N_y$) from the seed sensors (42), in that the adjusting means (80) are controlled in dependence on the seed delivery, and in that a remote control (44, 46) is provided for actuation of the adjusting means (80) to adjust the position of the metering members (32) also during travel of the seeder (10).

2. A drill device according to claim 1, characterized in that a seed meter (M) comprises a corrugated feed drum (32) movable laterally inside a housing (34) and which can be rotated and moved laterally by a drive shaft (22).

3. A drill device according to claim 1 or 2, characterized in that there are control means (100) by means of which the seed delivery signal ($R_a$) of the at least one seed sensor (42) is compared with a setpoint value ($R_d$) determined by an input device for the seed delivery and an error signal ($D_r$) is formed, which serves for automatic follow-up of the adjusting means (80).

4. A drill device according to any of claims 1 to 3, characterized in that at least **n** seed meters (M) are laterally adjustable by the adjusting means (80), where **n** is an integer greater than 1, and in that a seed sensor (42) is associated with each of **n-x** of the **n** seed meters (M), where **n-x** is an integer greater than or equal to 1 but smaller than **n**.

5. A drill device according to any of claims 3 to 4, characterized in that there is provided an alarm device (46) which provides perceptible signals to the operator when the error signal ($D_r$) exceeds a predetermined limit value.

6. A drill device according to any of claims 1 to 5, characterized in that means are provided for detecting the position of the adjusting means (80) and in that perceptible signals are given to the operator on attaining a predetermined limit position of the adjusting means (80).

7. A drill device according to any of claims 1 to 6, characterized in that there are at least two sets of seed meters (M), which each contain separate drive means (22, 26) for the rotation and adjusting means (80a, 80b, 80c) for adjusting the seed delivery, in that at least one seed sensor (42) is associated with each set and in that a separate signal for the seed delivery is formed for each set, which is derived for automatic operation of the associated adjusting means (80a, 80b, 80c).

8. A drill device according to claim 7, characterized in that electronic control means (120) are provided, whereby the measuring signals ($N_y$) of the sets are processed sequentially and derived for control of the associated adjusting means (80a, 80b, 80c).

**Revendications**

1. Semoir en ligne pour semences, avec plusieurs doseurs de semences juxtaposés (M), qui présentent chacun un organe doseur rotatif (32) disposé dans un boîtier de doseur associé (34), avec des moyens d'entraînement (22,26) pour faire tourner les organes doseurs (32) en fonction de la vitesse de déplacement de la semeuse (10) équipée du semoir en ligne, de sorte que la délivrance de semences dépend de la vitesse de déplacement, et avec un moyen de réglage (80) pour modifier la position des organes doseurs (32) transversalement à la direction de déplacement, permettant ainsi de régler la délivrance de semences, caractérisé en ce

qu'à plusieurs des doseurs de semences ($M_y$) est associé respectivement un capteur de semences (42) servant à détecter la délivrance de semences et dont les signaux de mesure ($N_y$) sont utilisés pour produire un signal ($R_a$) correspondant à la délivrance de semences, qu'il est prévu un formateur de valeur moyenne (60), qui forme un signal ($A_1$) de délivrance moyenne de semences à partir des signaux de mesure ($N_y$) des capteurs de semences (42), que le moyen de réglage (80) est commandé en fonction de la délivrance de semences, et qu'il est prévu une unité de commande (44,46), qui peut être actionnée à partir d'un emplacement éloigné et au moyen de laquelle le moyen de réglage (80) servant à décaler la position des organes doseurs (32) peut être également déplacé pendant le déplacement du semoir.

2. Semoir en ligne selon la revendication 1, caractérisé en ce qu'un doseur de semences (M) comprend un tambour d'alimentation cannelé (32) latéralement déplaçable à l'intérieur d'un boîtier (34), le tambour (32) pouvant être mis en rotation et déplacé latéralement par un arbre d'entraînement (22).

3. Semoir en ligne selon la revendication 1 ou 2, caractérisé en ce qu'l est prévu un moyen de commande (100), qui compare le signal de délivrance de semences ($R_a$) du ou des capteurs de semences (42) à au moins une consigne de délivrance de semences ($R_d$) prédéfinissable par une unité d'introduction de données (46), et qui forme un signal d'erreur ($D_r$) servant à ajuster automatiquement le moyen de réglage (80).

4. Semoir en ligne selon l'une quelconque des revendications 1 à 3, caractérisé en ce que le moyen de réglage (80) permet de déplacer latéralement au moins n doseurs de semences (M), n étant un nombre entier supérieur à 1, et en ce qu'un capteur de semences respectif (42) est associé à n-x des n doseurs de semences (M), n-x étant un nombre entier supérieur ou égal à 1 mais inférieur à n.

5. Semoir en ligne selon l'une quelconque des revendications 3 à 4, caractérisé en ce qu'il est prévu une unité de signalisation (46), qui délivre des signaux pouvant être perçus par l'opérateur lorsque le signal d'erreur ($D_r$) dépasse une valeur limite prédéfinissable.

6. Semoir en ligne selon l'une quelconque des revendications 1 à 5, caractérisé en ce qu'il est prévu un moyen pour détecter la position du moyen de réglage (80), et en ce que des signaux pouvant être perçus par l'opérateur sont délivrés à l'atteinte d'une position limite prédéfinissable du moyen de réglage (80).

7. Semoir en ligne selon l'une quelconque des revendications 1 à 6, caractérisé en ce qu'il est prévu au moins deux groupes de doseurs de semences (M), qui comprennent chacun des moyens d'entraînement séparés (22,26) pour leur mise en rotation et un moyen de réglage séparé (80a, 80b, 80c) pour modifier la délivrance de semences, et en ce qu'au moins un capteur de semences (42) est associé à chaque groupe, et en ce qu'un signal séparé de délivrance de semences est formé pour chaque groupe, signal qui est utilisé pour l'actionnement automatique du moyen de réglage associé (80a, 80b, 80c).

8. Semoir en ligne selon la revendication 7, caractérisé en ce qu'il est prévu un moyen de commande électronique (120), qui évalue successivement les signaux de mesure ($N_y$) des groupes et les utilise pour commander le moyen de réglage associé (80a, 80b, 80c).

FIG. 1

FIG. 2

# FIG. 3